# EUROPÄISCHE PATENTSCHRIFT

(11) **EP 2 389 522 B1**
(45) Veröffentlichungstag und Bekanntmachung des Hinweises auf die Patenterteilung: **14.05.2014**
(21) Anmeldenummer: 10702816.9
(22) Anmeldetag: 05.01.2010
(51) Int. Cl.: F16D 3/76

(54) **ELATISCHE KUPPLUNG**
ELASTIC COUPLING
ACCOUPLEMENT ÉLASTIQUE

(30) Priorität: 26.01.2009 DE 102009006104
(43) Veröffentlichungstag der Anmeldung: 30.11.2011
(73) Patentinhaber: Hackforth GmbH, 44653 Herne (DE)
(72) Erfinder: FLINTROP, Joachim, 47057 Duisburg (DE); TRÖSTER, Oliver, 44649 Herne (DE)
(74) Vertreter: Isfort, Olaf
(86) Internationale Anmeldenummer: PCT/EP2010/000009
(87) Internationale Veröffentlichungsnummer: WO 2010/083938

(56) Entgegenhaltungen:
- WO-A1-2006/045516
- US-A- 5 660 591
- US-A1- 2008 171 603

## Beschreibung

Die Erfindung betrifft eine rotationssymmetrische elastische Kupplung mit einer ringförmigen Nabe, die aus einem im Wesentlichen starren Werkstoff besteht und von einem Außenring aus weichem, gummielastischem Werkstoff umgeben ist, wobei in den Außenring ein Einlegering aus einem im Wesentlichen starren Werkstoff eingebettet ist, und wobei der Einlegering aus einem vorzugsweise teilkristallinen, thermoplastischen Polymer besteht.

Bei einer nach dem Stand der Technik (vgl. EP 1 330 613 B1) bekannten Kupplung der genannten Art besteht der zur Verstärkung und Versteifung des Außenringes dienende Einlegering aus metallischem Bandmaterial, welches mit halbkreisförmigen Einformungen versehen ist. Weiterhin ist es aus der GB 2 101 709 A bekannt, den aus gummielastischem Material bestehenden Außenring einer Kupplung mit einem eingebetteten, völlig steifen Metallring zu verstärken.

Solche metallischen Einlegeringe sind kostspielig in der Herstellung und aufgrund ihrer völlig abweichenden mechanischen Eigenschaften nur schlecht an das Dehnungsverhalten der gummielastischen Einbettungsmasse anpassbar. Es ist deshalb nach wie vor nötig, zur Herstellung von unterschiedlich steifen elastischen Kupplungen mit unterschiedlich steifen gummielastischen Massen zu arbeiten, deren Verarbeitung umso schwieriger wird, je steifer sie sind.

Die Patentanmeldung US 2008/0171603 A1 zeigt eine Wellenkupplung mit zwei ineinander steckbaren Endstücken, welche mittels einer elastischen Manschette zusammengehalten werden können, wobei die Manschette außen um die beiden Endstücke gelegt ist. In die Manschette kann eine sich spiralförmig erstreckende Verstärkung eingebettet sein.

Das Patent US 5,660,591 A zeigt eine Wellenkupplung mit zwei ineinander steckbaren Kupplungshälften, zwischen welchen ein Einlegering mit einer formschlüssigen Schnittstelle zu jeder der Kupplungshälften angeordnet ist.

Es ist deshalb Aufgabe der Erfindung, die elastische Kupplung der eingangs genannten Art dahingehend weiterzubilden, dass trotz Verwendung eines gleich bleibend weichen gummielastischen Werkstoffes für den Außenring und zu günstigen Kosten die Steifigkeit der Kupplung in einem großen Veränderungsbereich und fein abgestuft verändert werden kann.

Zur Lösung dieser Aufgabe schlägt die Erfindung ausgehend von der elastischen Kupplung der eingangs genannten Art vor, dass das vorzugsweise teilkristalline, thermoplastische Polymer die gleiche Dichte wie der gummielastische Werkstoff hat.

Die Verwendung von Kunststoff anstelle von Metall für den versteifenden Einlegering eröffnet viele Möglichkeiten zur kostengünstigen Veränderung der Steifigkeit der Kupplung, ohne auf die Verwendung eines anderen gummielastischen Werkstoffes für den Außenring angewiesen zu sein. Eine erste Gruppe von Möglichkeit besteht darin, die Form und/oder die Abmessungen des Einlegeringes zu verändern. Dies kann beispielsweise dadurch geschehen, dass man für die Herstellung der Einlegeringe Spritzgussformen verwendet, deren formgebende Wandungen fein abgestuft verschiebbar sind, so dass es auf einfache Weise möglich ist, unterschiedlich große bzw. unterschiedlich gestaltete Einlegeringe zu produzieren, die der Kupplung jeweils abweichende Steifigkeiten verleihen. Alternativ oder zusätzlich kann man auch das für die Herstellung der Einlegeringe verwendete Polymermaterial durch Zugabe von mehr oder weniger Weichmacher mehr oder weniger hart einstellen, wodurch im Ergebnis ebenfalls die Steifigkeit der Kupplung verändert werden kann.

Durch die gleiche Dichte wird erreicht, dass trotz unterschiedlicher Form und Größe des Einlegeringes das Gewicht und das Trägheitsmoment der Kupplung gleich bleibt, wenn die Außenabmessungen gleich bleiben.

Als teilkristallines thermoplastisches Polymer ist in erster Linie Polyamid geeignet, welches eine hohe Festigkeit hat und sich im Maschinenbau zur Herstellung von Maschinenteilen bewährt hat. Die Verwendung anderer Kunststoffe gemäß der Erfindung ist aber ohne weiteres ebenfalls denkbar.

Eine besonders bevorzugte Ausführungsform der Erfindung sieht vor, dass der Außenring am Außenumfang mit einer zur Übertragung von Drehmomenten dienenden Verzahnung versehen ist und dass der in den Außenring eingebettete Einlegering eine der Außenkontur der Verzahnung folgende Außenkontur und eine geschlossen ringförmige Innenkontur hat. Ein derart ausgestalteter Einlegering unterstützt in idealer Weise die am Außenumfang des Außenringes befindliche Verzahnung und kann im Bereich der geschlossenen ringförmigen Innenkontur zur Erzielung fein abgestufter Steifigkeiten fein abgestuft verändert werden. Eine fein abgestufte Steifigkeit des Einlegeringes kann man beispielsweise dadurch herbeiführen, dass die für die Herstellung des Einlegeringes verwendete Form eine entsprechend feinstufig verstellbare Innenkontur des Formhohlraumes hat.

Weiterhin ist vorgesehen, dass die Außenkontur des Einlegeringes und die Außenkontur der Verzahnung des Außenringes im Umfangsbereich ineinandergreifen und über den Umfang des Außenringes überall nahezu den gleichen Abstand voneinander haben. Auf diese Weise wird sichergestellt, dass die Zähne der Verzahnung überall durch eine ausreichend dicke Schicht aus gummielastischem Material geschützt werden. Als gummielastisches Material wird vorzugsweise Silikongummi verwendet, welches sowohl mechanisch als auch chemisch sehr beständig ist.

Ein Ausführungsbeispiel der Erfindung wird im Folgenden anhand der Zeichnungen näher erläutert. Es zeigen:
- Figur 1: perspektivisch eine Kupplungsscheibe gemäß der Erfindung, teilweise aufgebrochen;

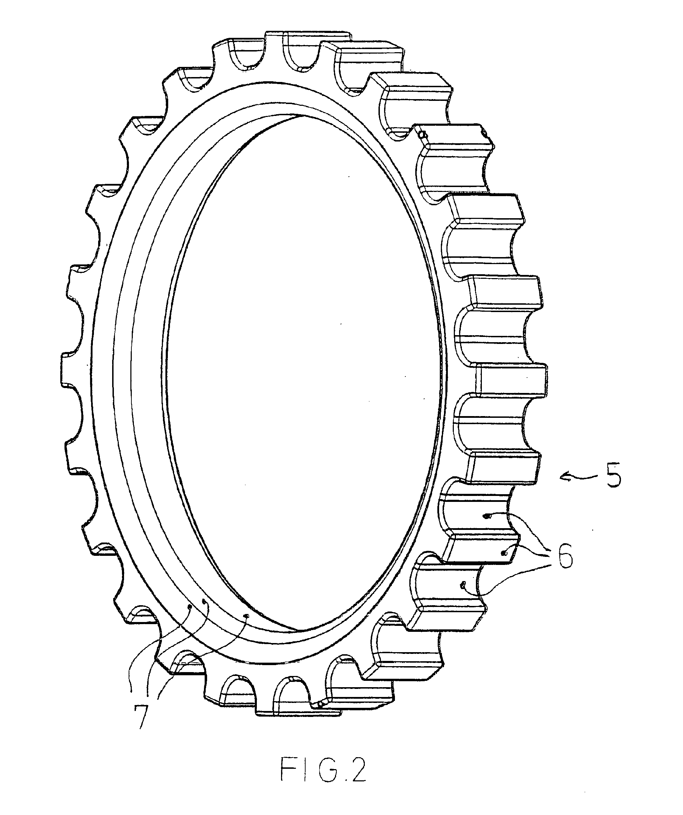

- Figur 2: perspektivisch den Einlegering.

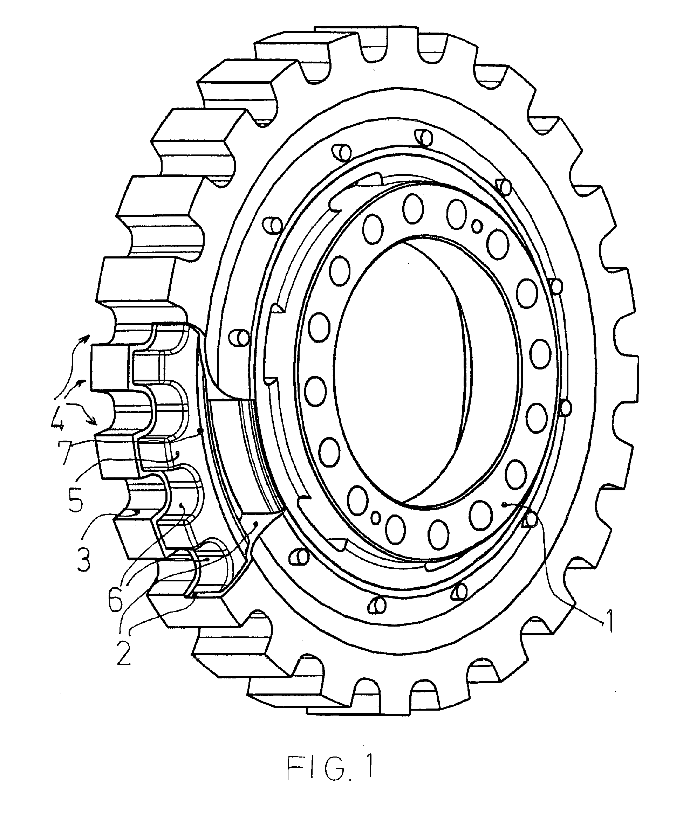

In Figur 1 ist die im Wesentlichen aus starrem Werkstoff bestehende Nabe der Kupplung mit dem Bezugszeichen 1 bezeichnet. Die Nabe ist von einem aus gummielastischem Material, vorzugsweise aus Silikongummi bestehenden Außenring 2 umgeben. Der Außenring hat am Außenumfang eine mit halbkreisförmigen Einformungen 3 versehene Verzahnung 4. In diese Einformungen 3 der Verzahnung 4 können in der Zeichnung nicht näher dargestellte, zur Drehmomentübertragung dienende Eingriffselement eingreifen.

In den Außenring 2 ist ein aus einem teilkristallinen thermoplastischen Polymer, vorzugsweise aus Polyamid, gefertigter Einlegering 5 eingebettet. Dieses Polymer hat die gleiche Dichte wie der gummielastische Werkstoff, aus welchem der Außenring 2 besteht.

Der Einlegering 5 hat eine Außenkontur 6, die der Außenkontur der Verzahnung 4 des Außenringes 2 derart folgt, dass beide Konturen in Umfangsrichtung gesehen ineinandergreifen und über den Umfang des Außenringes 2 gesehen überall nahezu den gleichen Abstand voneinander haben. Das heißt mit anderen Worten, dass die Außenkontur 6 des Einlegeringes über den gesamten Umfang von einer etwa gleich dicken Schicht des gummielastischen Materials des Außenrings 2 abgedeckt ist.

Abweichend von der mit Einformungen versehenen Außenkontur 6 des Einlegeringes 5 hat der Einlegering 5 eine geschlossene, ringförmige Innenkontur 7 mit über den Umfang gleich bleibendem Radius.

Zur Erhöhung der Steifigkeit der Kupplung genügt es beispielsweise, den Radius der ringförmigen Innenkontur 7 des Einlegeringes 5 kleiner zu machen. Das kann bei der Herstellung von solchen Einlegeringen 5 dadurch bewerkstelligt werden, dass die Gießform für den thermoplastischen Werkstoff entsprechend verstellbar ist. Bei der Einbettung von auf diese Art und Weise mehr oder weniger steif hergestellten Einlegeringen 5 bleiben die äußeren Abmessungen, das verwendete Material, das Gewicht und das Trägheitsmoment der Kupplung unverändert.

Abweichend vom dargestellten Ausführungsbeispiel kann der Einlegering 5 auch insgesamt eine glatte Außenkontur haben. Ebenso ist natürlich ein Außenring 2 ohne am Außenring angeordnete Verzahnung denkbar.

Veränderungen der Steifigkeit können auch dadurch herbeigeführt werden, dass das für die Herstellung des Einlegeringes 5 verwendete Polymer durch Zugabe von mehr oder weniger Weichmacher unterschiedlich hart eingestellt wird.

## Patentansprüche

1. Rotationssymmetrische elastische Kupplung mit einer ringförmigen Nabe (1), die aus einem im Wesentlichen starren Werkstoff besteht und von einem Außenring (2) aus weichem, gummielastischem Werkstoff umgeben ist, wobei in den Außenring ein Einlegering (5) aus einem im Wesentlichen starren Werkstoff eingebettet ist, und wobei der Einlegering (5) aus einem vorzugsweise teilkristallinen, thermoplastischen Polymer besteht, **dadurch gekennzeichnet, dass** das thermoplastische Polymer die gleiche Dichte wie der gummielastische Werkstoff hat.

2. Kupplung nach Anspruch 1, **dadurch gekennzeichnet, dass** das thermoplastische Polymer ein Polyamid ist.

3. Kupplung nach Anspruch 1, **dadurch gekennzeichnet, dass** der Außenring (2) am Außenumfang mit einer zur Übertragung von Drehmomenten dienenden Verzahnung (4) versehen ist und dass der in den Außenring (2) eingebettete Einlegering (5) eine der Außenkontur der Verzahnung (4) folgende Außenkontur (6) und eine geschlossene ringförmige Innenkontur (7) hat.

4. Kupplung nach Anspruch 3, **dadurch gekennzeichnet, dass** die Außenkontur (6) des Einlegeringes (5) und die Außenkontur der Verzahnung (4) des Außenringes (2) in Umfangsrichtung ineinandergreifen und über den Umfang des Außenringes (2) überall nahezu den gleichen Abstand voneinander haben.

## Claims

1. A rotationally symmetrical elastic coupling having an annular hub (1) composed of a substantially rigid material and which is surrounded by an outer ring (2) composed of soft, resiliently elastic material, wherein an inlay ring (5) composed of a substantially rigid material is embedded in the outer ring (2), and wherein the inlay ring (5) is comprised of a preferably partially crystalline thermoplastic polymer **characterized in that** the thermoplastic polymer has substantially the same density as the resiliently elastic material..

2. A coupling according to claim 1, **characterized in that** the thermoplastic polymer is a polyamide.

3. A coupling according to claim 1, **characterized in that** the outer ring (2) at its outer circumference is provided with a teething (4) serving for transmission of torques and that the inlay ring (5) embedded into the outer ring (2) has an outer contour (6) which follows the outer contour of the teething (4) and that it has a closed annular inner contour (7).

4. A coupling according to claim 3, **characterized in that** the outer contour (6) of the inlay ring (5) and the outer contour of the teething (4) of the outer ring (2) engage into each other in circumferential direction and have nearly the same distance to each other throughout, viewed over the circumference of the outer ring (2).

## Revendications

1. Accouplement élastique et symétrique en rotation avec un moyeu annulaire (1), réalisé en un matériau sensiblement rigide et entouré par un anneau extérieur (2) réalisé en un matériau souple et ayant l'élasticité du caoutchouc, un anneau d'insert (5) réalisé en un matériau sensiblement rigide étant incorporé dans l'anneau extérieur (2), l'anneau d'insert (5) étant réalisé en un polymère thermoplastique, de préférence semi-cristallin, **caractérisé en ce que** le polymère thermoplastique a la même densité que le matériau ayant l'élasticité du caoutchouc.

2. Accouplement selon la revendication 1, **caractérisé en ce que** le polymère thermoplastique est un polyamide.

3. Accouplement selon la revendication 1, **caractérisé en ce que** l'anneau extérieur (2) comporte sur sa périphérie une denture (4) pour transmettre du couple et **en ce que** l'anneau d'insert (5) incorporé dans l'anneau extérieur (2) présente un contour extérieur (6) suivant le contour extérieur de la denture (4) et un contour intérieur (7) annulaire complet.

4. Accouplement selon la revendication 3, **caractérisé en ce que** le contour extérieur (6) de l'anneau d'insert (5) et le contour extérieur de la denture (4) de l'anneau extérieur (2) s'engrènent dans le sens périphérique et présentent le long de la périphérie de l'anneau extérieur (2) partout une distance sensiblement constante l'un de l'autre.
